Europäisches Patentamt

European Patent Office

Office européen des brevets

(11) Numéro de publication : **0 371 852 B1**

(12) **FASCICULE DE BREVET EUROPEEN**

(45) Date de publication du fascicule du brevet :
**30.09.92 Bulletin 92/40**

(21) Numéro de dépôt : **89403206.9**

(22) Date de dépôt : **21.11.89**

(51) Int. Cl.⁵ : **B62D 5/04,** B62D 7/14,
B62D 3/12

(54) **Dispositif de braquage des roues arrière d'un véhicule à quatre roues directrices.**

(30) Priorité : **29.11.88 FR 8815556**

(43) Date de publication de la demande :
**06.06.90 Bulletin 90/23**

(45) Mention de la délivrance du brevet :
**30.09.92 Bulletin 92/40**

(84) Etats contractants désignés :
**DE ES GB IT SE**

(56) Documents cités :
**EP-A- 0 133 003**
**WO-A-87/02632**
**FR-A- 1 074 632**
**FR-A- 2 591 986**
**PATENT ABSTRACTS OF JAPAN vol. 11, no.**
**16 (M-554)(2463) 16 janvier 1987, & JP-A-61**
**191468 (NIPPON SEIKO K.K.) 26 août1986,**

(73) Titulaire : **REGIE NATIONALE DES USINES**
**RENAULT**
**Boîte postale 103 8-10 avenue Emile Zola**
**F-92109 Boulogne-Billancourt (FR)**

(72) Inventeur : **Moretti, Antonio**
**48, Rue des Cuffins**
**F-78830 Bonnelles (FR)**
Inventeur : **Laffont, Jean-Louis**
**4, Rue Daudet**
**F-75014 Paris (FR)**
Inventeur : **Vaumoron, Pascal**
**1, Place Darius Milhaud**
**F-78180 Montigny-le-Bretonneux (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

## Description

La présente invention se rapporte à un dispositif de braquage des roues arrière d'un véhicule à quatre roues directrices.

On connaît des dispositifs à quatre roues directrices qui utilisent un moteur électrique entraînant une barre transversale par l'intermédiaire d'un ensemble mécanique comprenant éventuellement un mécanisme de réduction. La publication FR 2605280 décrit notamment un dispositif de braquage des roues arrière pour véhicule à quatre roues directrices. Ce dispositif comporte un moteur électrique agissant sur les roues arrière par un système vis-écrou, un mécanisme réducteur étant interposé entre l'arbre de sortie du moteur et l'écrou. Ce type de dispositif occupe un espace important entre les rotules des biellettes de commande des roues. De même, il occupe un espace important dans le sens longitudinal du véhicule et notamment en avant de l'axe de la barre transversale, ce qui pose des problèmes de mise en place.

Le but de la présente invention est de proposer un dispositif de braquage des roues arrière d'un véhicule à quatre roues directrices, qui ait un encombrement suffisamment réduit afin de pouvoir être monté sans difficulté dans l'architecture arrière d'un véhicule automobile de tourisme actuel.

Selon l'invention, le dispositif de braquage des roues arrière d'un véhicule à quatre roues directrices comprend un système vis-écrou constitué d'une vis et d'un écrou entraîné en rotation par un système d'entrainement électrique par l'intermédiaire d'un mécanisme de réduction. Ce dispositif est caractérisé en ce que la vis est disposée entre deux éléments de guidage en direction longitudinale et est solidaire d'une barre inter-rotules reliée à chacune de ses extrémités à une biellette de commande de roues tout en étant parallèle à la vis, et en ce que l'ensemble est supporté par une plaque centrale disposée perpendiculairement à l'axe de la vis, la plaque centrale recevant deux carters et disposés de part et d'autre de ladite plaque sur laquelle ils viennent se fixer de manière à avoir un ensemble fermé, la dite plaque centrale étant traversée par la barre inter-rotules.

Le dispositif de braquage des roues arrières d'un véhicule à quatre roues directrices selon l'invention, présente ainsi l'avantage d'avoir un encombrement relativement réduit dans le sens transversal, ce qui permet une mise en place aisée entre les rotules des biellettes de commande des roues. De plus, le dispositif a un encombrement très faible en avant de l'axe de la barre inter-rotules.

D'autres caractéristiques et avantages de la présente invention ressortiront de la description qui suit le mode de réalisation donné à titre d'exemple en référence aux dessins annexés sur lesquels :

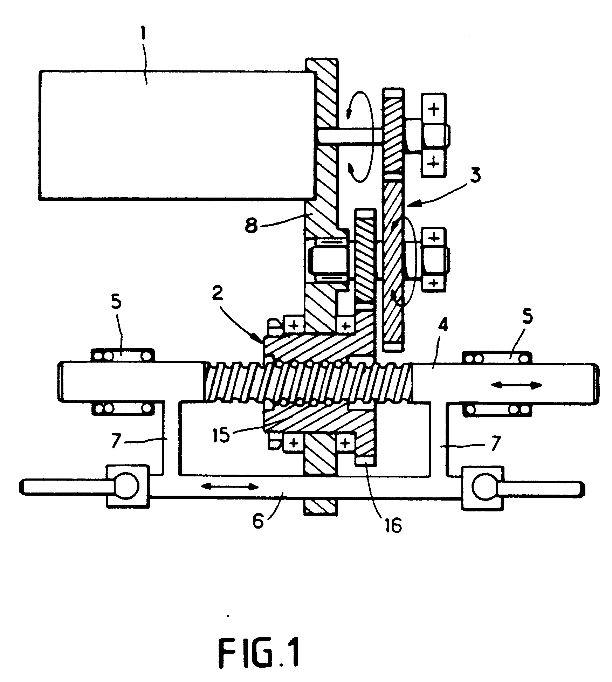

– La figure 1 est une vue schématique développée en coupe de l'ensemble du dispositif selon l'invention,

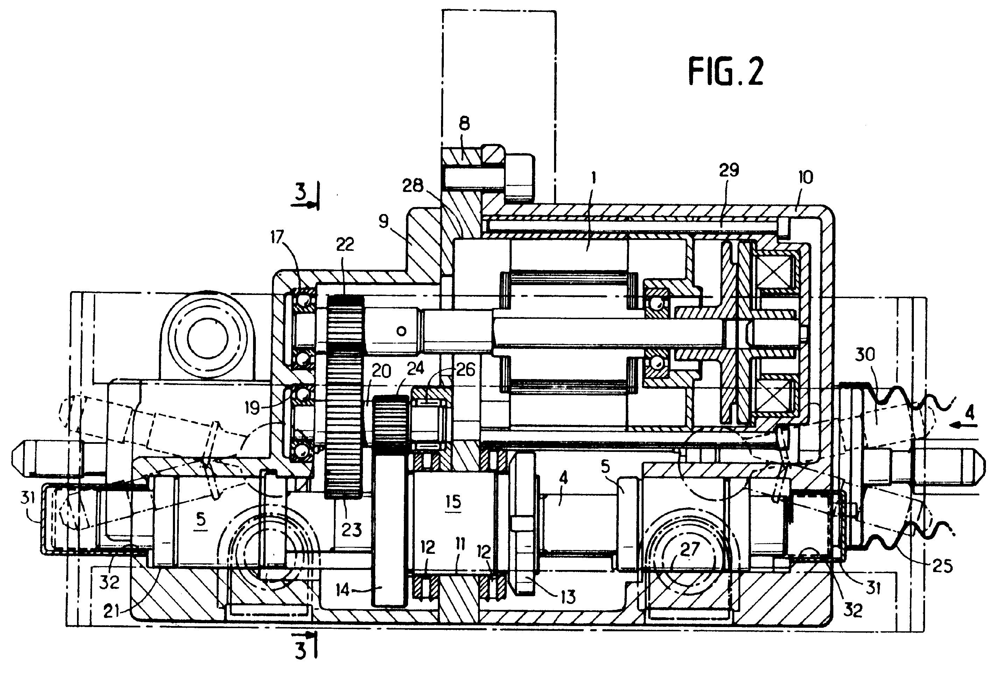

– La figure 2 est une vue en coupe transversale de l'ensemble du dispositif correspondant a la figure passant par l'axe du système d'entraînement électrique et par l'axe de la vis,

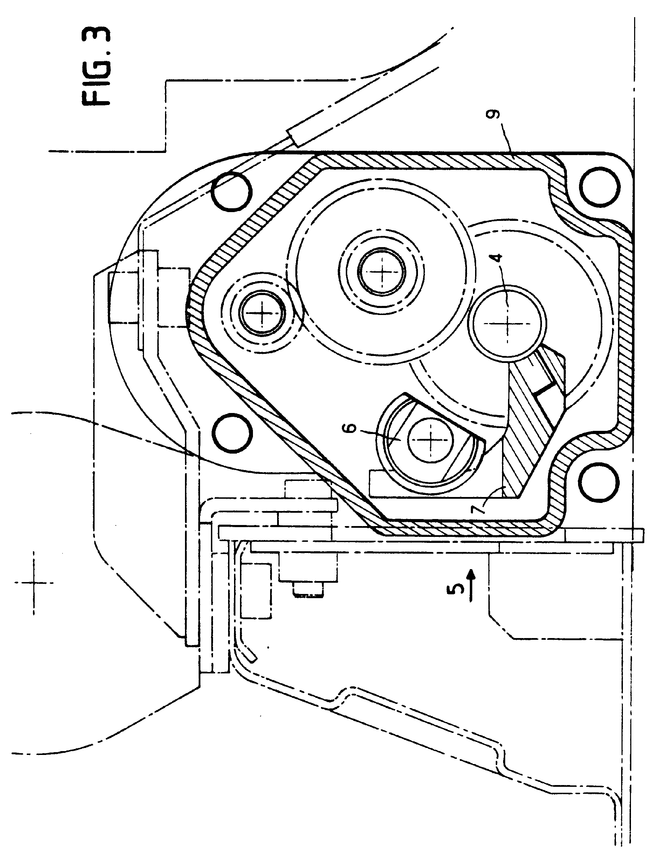

– La figure 3 est une coupe selon 3 de la figure 2,

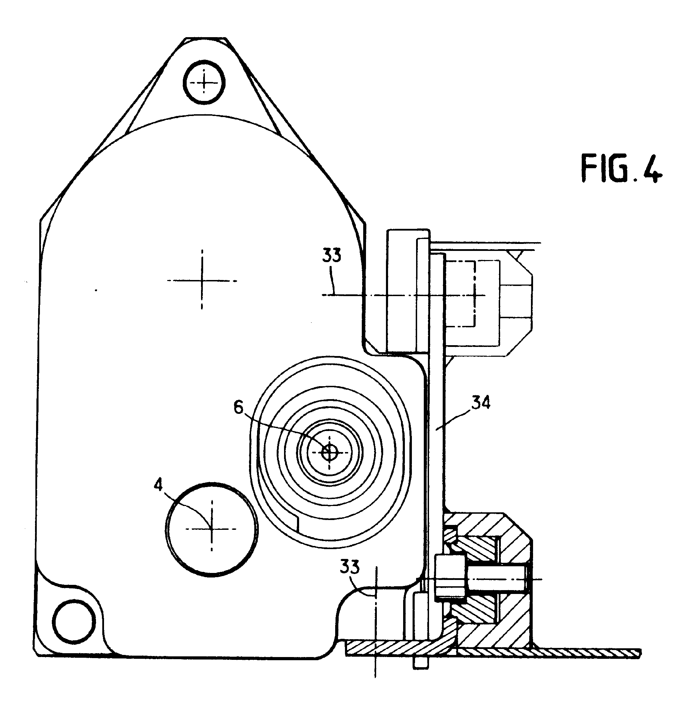

– La figure 4 est une vue suivant 4 de la figure 2, avec une coupe partielle,

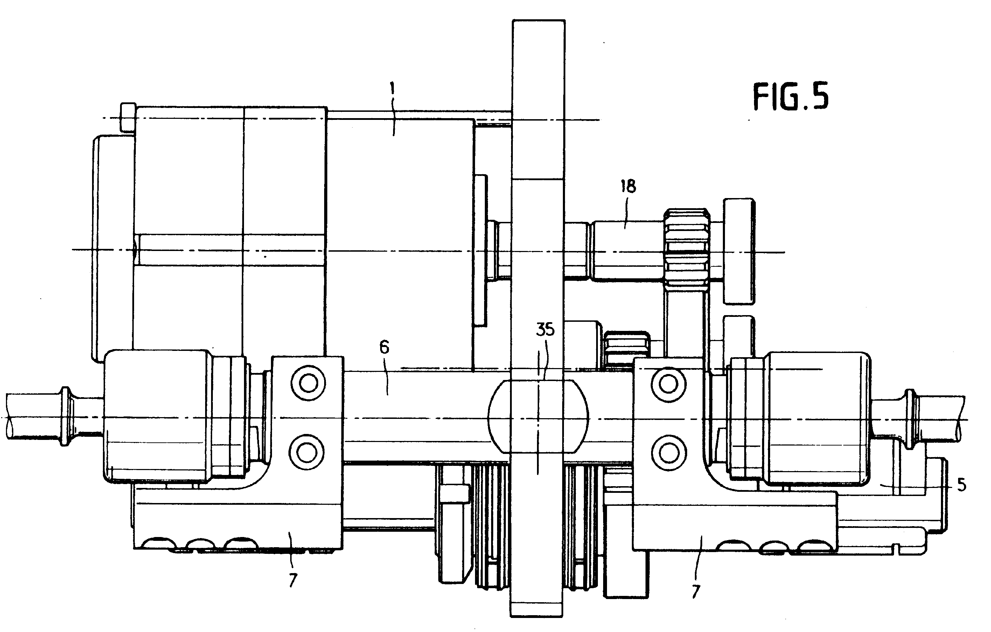

– La figure 5 est une vue suivant 5 de la figure 3, les carters étant enlevés,

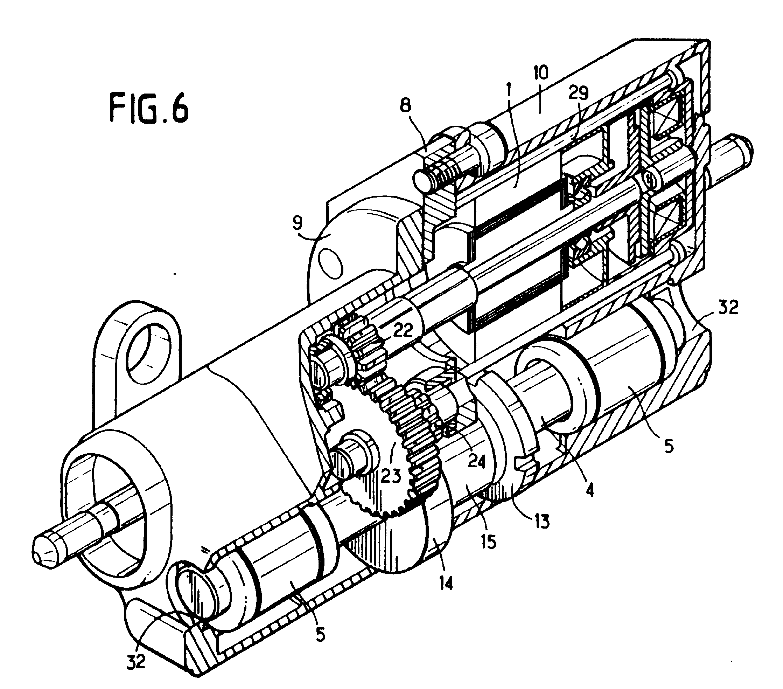

– La figure 6 est une vue en perspective cavalière avec un arrachement de l'ensemble du dispositif selon l'invention.

Le dispositif de braquage des roues arrières d'un véhicule à quatre roues directrices selon l'invention comprend, d'une part :

– un système d'entraînement électrique référencé 1 dans son ensemble,

– un mécanisme de réduction référencé 3 dans son ensemble,

– un système vis-écrou référencé 2 dans son ensemble.

Le système d'entraînement 1 communique le mouvement de rotation au système vis-écrou 2 par l'intermédiaire du mécanisme de réduction 3.

D'autre part, le dispositif selon l'invention comprend :

– deux éléments de guidage 5 disposés de part et d'autre de la vis 4,

– une barre inter-rotules 6,

– deux éléments de liaison 7.

La vis 4 est solidaire de la barre inter-rotules 6 au moyen des deux éléments de liaison 7 ; la vis 4 et la barre inter-rotules 6 étant parallèles l'une par rapport à l'autre.

Une plaque centrale 8 supporte l'ensemble du dispositif ainsi que deux carters référencés 9 et 10 qui viennent se fixer de part et d'autre de ladite plaque 8 de manière à avoir un ensemble fermé. La barre inter-rotules 6 traverse la plaque centrale 8.

Le mécanisme de réduction 3 comprend un pignon d'entraînement 22, deux pignons intermédiaires 23 et 24 et un pignon récepteur 16. Le pignon d'entraînement 22 est monté sur un axe d'entraînement 18 et est solidaire avec cet axe d'entraînement 18 qui est mû en rotation par le système d'entraînement électrique 1 au moteur d'entraînement. Les pignons intermédiaires 23 et 24 sont montés sur un axe intermédiaire 20 avec lequel ils sont solidaires. Le pignon récepteur 16 est solidaire avec l'écrou 15 du système vis-écrou 2. Le pignon d'entraînement 22 engrène avec le pignon intermédiaire 23, et le pignon intermédiaire 24 engrène avec le pignon récepteur 16.

Le système vis-écrou 2 est monté par l'intermédiaire de l'écrou 15 dans un logement 11 de la plaque centrale 8. L'écrou 15 est tenu axialement par deux butées 12 à rouleaux, qui sont situées de part et d'autre de la plaque centrale 8.

L'écrou 15 a un épaulement 14 qui vient s'appliquer contre la butée 12 à rouleaux par l'intermédiaire d'un écrou de serrage 13 qui vient se visser sur l'extrémité filetée dudit écrou 15 et se bloquer contre l'autre butée 12 à rouleaux. L'ensemble de l'écrou 15 est conçu pour que l'écrou de serrage 13 donne une précontrainte sur les butées 12 à rouleaux.

L'écrou 15 porte à la périphérie de l'épaulement 14, le pignon récepteur 16 avec lequel il est solidaire. Le système vis-écrou 2 est à circulation de billes.

La vis 4 se prolonge de part et d'autre de sa partie filetée de manière à pouvoir être supportée par les deux éléments de guidage 5, qui sont des douilles à billes.

Les deux éléments de liaison 7 sont des pièces en forme d'équerre qui se montent sur la vis 4 de part et d'autre de l'écrou 15, et qui sont fixés sur ladite vis 4 à l'aide de vis. Ces éléments de liaison 7 portent la barre inter-rotules 6, qui est fixée par l'intermédiaire de vis sur lesdits éléments de liaison 7. De plus, les éléments de liaison 7 s'engagent respectivement à l'intérieur de l'élément de guidage 5 correspondant, qui possède une ouverture de manière à limiter l'encombrement axial.

Le carter 9 comporte un logement 17, un logement 19 et un logement 21. Le logement 17 reçoit un roulement qui supporte l'axe d'entraînement 18, et le logement 19 reçoit un roulement qui supporte l'axe intermédiaire 20. Le logement 21 est aménagé pour y placer l'élément de guidage 5 correspondant. L'axe intermédiaire 20 est supporté, du côté de l'écrou 15, par un roulement à aiguilles 20 qui est monté sur la plaque centrale 8. Le mécanisme de réduction 3 est ainsi enfermé dans le carter 9.

Le moteur d'entraînement 1 est placé à l'intérieur du carter 10. Il se monte dans un logement 28 de la plaque centrale 8, et il est fixé sur cette plaque centrale 8 par l'intermédiaire de vis 29.

L'arbre d'entraînement 18 est ainsi supporté par un roulement disposé à l'intérieur du moteur d'entraînement 1, et par le roulement placé à l'intérieur du logement 17.

Chacun des carters 9 et 10 est fixé sur la plaque centrale 8 au moyen de vis.

Le carter 10 comprend aussi un logement 27 qui reçoit l'élément de guidage 5 correspondant.

L'étanchéité de chacune des extrémités de la barre inter-rotules 6 est assurée par un soufflet 25, qui englobe également la rotule 30 correspondante.

L'étanchéité de chacune des extrémités de la vis 4 est assurée par un bouchon 31 qui se monte dans un trou de passage 32 de ladite extrémité correspondante. Ce trou de passage 32 est aménagé dans le carter 9 ou 10 intéressé.

L'ensemble des carters 9 et 10 a des trous de fixation 33 qui permettent de monter et de fixer l'ensemble du dispositif sur une face plane 34 du berceau arrière du véhicule.

La barre inter-rotules 6 comporte deux méplats 35, qui sont symétriques par rapport à l'axe de la barre, et qui ont une longueur légèrement supérieure à la course de ladite barre 6 augmentée de l'épaisseur de la plaque centrale 8.

**Revendications**

1) Dispositif de braquage des roues arrière d'un véhicule à quatre roues directrices comprenant un système vis-écrou (2) constitué d'une vis (4) et d'un écrou (15) entraîné en rotation par un système d'entraînement électrique (1) par l'intermédiaire d'un mécanisme de réduction (3), caractérisé en ce que la vis (4) est disposée entre deux éléments (5) destinés à son guidage longitudinal, et est solidaire d'une barre inter-rotules (6) reliée à chacune de ses extrémités à une biellette de commande de roues tout en étant parallèle à la vis (4), et en ce que l'ensemble est supporté par une plaque centrale (8) disposée perpendiculairement à l'axe de la vis (4), la plaque centrale (8) recevant deux carters (9) et (10) disposés de part et d'autre de ladite plaque (8) sur laquelle ils viennent se fixer de manière à avoir un ensemble fermé, ladite plaque centrale (8) étant traversée par la barre inter-rotules (6).

2/ Dispositif de braquage selon la revendication 1, caractérisé en ce que le système vis-écrou (2) est à circulation de billes.

3/ Dispositif de braquage selon la revendication 1, caractérisé en ce que le système vis-écrou (2) est monté dans un logement (11) de la plaque centrale (8) et est tenu de part et d'autre par une butée (12) tenue par un écrou de serrage (13) qui coopère avec un épaulement solidaire (14) de l'écrou (15).

4/ Dispositif de braquage selon la revendication 3, caractérisé en ce que les butées (12) sont des butées à rouleaux et que l'écrou de serrage (13) donne une précontrainte sur lesdites butées (12) à rouleaux.

5/ Dispositif de braquage selon la revendication 3, caractérisé en ce que le pignon récepteur (16) du mécanisme de réduction est intégré à l'épaulement (14) de l'écrou (15).

6/ Dispositif de braquage selon la revendication 1, caractérisé en ce que les deux éléments de guidage (5) sont des douilles à billes.

7/ Dispositif de braquage selon la revendication 1, caractérisé en ce que les éléments de liaison (7) sont des pièces en forme d'équerre qui se montent sur la vis (4) et qui portent la barre inter-rotules (6), sur lesquelles ils sont fixés à l'aide de vis.

8/ Dispositif de braquage selon la revendication 1, caractérisé en ce que les éléments de liaison (7) s'engagent respectivement à l'intérieur de l'élément de guidage (5) correspondant, qui est ouvert.

9/ Dispositif de braquage selon l'une des revendications précédentes, caractérisé en ce que :

– le carter (9) comprend un logement (17) de roulement pour l'axe d'entraînement (18), un logement (19) de roulement pour l'axe intermédiaire (20) et un logement (21) pour l'élément de guidage (5) correspondant, le mécanisme de réduction (3) étant enfermé dans ce carter (9) et comprennent un pignon d'entraînement (22), solidaire de l'axe d'entraînement (18), deux pignons intermédiaires (23, 24) solidaires de l'axe intermédiaire (20) et le pignon récepteur (16) ; l'axe intermédiaire (20) étant supporté du côté de l'écrou (15) par un roulement à aiguilles (26) monté dans la plaque centrale (8),

– le carter (10) comprend un logement (27) pour l'élément de guidage (5) correspondant.

**10/** Dispositif de braquage selon la revendication 9, caractérisé en ce que le carter (10) comprend le moteur d'entraînement (1) qui se monte dans un logement (28) de la plaque centrale (8), et qui est fixé sur cette plaque centrale (8) par l'intermédiaire de vis (29).

**11/** Dispositif de braquage selon la revendication 9, caractérisé en ce que l'étanchéité de chacune des extrémités de la barre inter-rotules (6) est assurée par un soufflet (25) qui englobe la rotule correspondante (30).

**12/** Dispositif de braquage selon la revendication 9, caractérisé en ce que l'étanchéité de chacune des extrémités de la vis (4) est assurée par un bouchon (31) se montant dans le trou de passage (32) de ladite extrémité correspondante aménagé dans le carter (9, 10) intéressé.

**13/** Dispositif de braquage selon la revendication 9, caractérisé en ce que les carters (9, 10) ont des trous de fixation (33) qui permettent de monter et de fixer l'ensemble du dispositif sur la face plane (34) du berceau arrière du véhicule.

**14/** Dispositif de braquage selon la revendication 1, caractérisé en ce que la barre inter-rotules (6) comporte deux méplats (35) symétriques par rapport à l'axe de la barre et qui ont une longueur légèrement supérieure à la course de ladite barre (6) augmentée de l'épaisseur de la plaque centrale (8).

## Patentansprüche

1. Lenkvorrichtung für die Hinterräder eines durch vier Räder gelenkten Fahrzeugs, mit einem Schneckensystem 2, bestehend aus einer Schraube 4 und einer Mutter 15, die durch ein elektrisches Antriebssystem 1 in Drehungen versetzt wird mittels eines Untersetzungsmechanismus 3, dadurch gekennzeichnet, daß die Schraube 4 zwischen zwei ihrer Längsführung dienenden Teilen 5 angeordnet ist und fest mit einem Zwischengelenkstab 6 verbunden ist, dessen beide Enden mit einem Lenkhebel für die Räder verbunden sind und dabei parallel zur Schraube 4 ist, und daß die Gesamtheit von einer mittigen Platte 8 getragen wird, die senkrecht zur Achse der Schraube 4 verläuft, wobei die Platte 8 zwei Gehäuse 9 und 10 aufnimmt, die beidseits der Platte 8 angeordnet sind und an der sie dergestalt befestigt sind, daß sie eine geschlossene Einheit bilden, wobei die mittige Platte 8 von dem Zwischengelenkstab 6 durchsetzt wird.

2. Lenkvorrichtung nach Anspruch 1, dadurch gekennzeichnet, daß das Schneckensystem 2 kugelgelagert ist.

3. Lenkvorrichtung nach Anspruch 1, dadurch gekennzeichnet, daß das Schneckensystem 2 in einer Ausnehmung 11 der mittigen Platte 8 angeordnet ist und beidseits von einem beschlag 12 gehalten wird, der durch eine Klemmutter 13 gehalten wird, die mit einer Schulter 14 der Mutter 15 zusammenwirkt.

4. Lenkvorrichtung nach Anspruch 3, dadurch gekennzeichnet, daß die Anschläge 12 Rollenlager sind und daß die Klemmutter 13 den Rollenlagern 12 eine Vorspannung erteilt.

5. Lenkvorrichtung nach Anspruch 3, dadurch gekennzeichnet, daß das Aufnahmeritzel 16 des Untersetzungsmechanismus Teil der Schulter 14 der Mutter 15 ist.

6. Lenkvorrichtung nach Anspruch 1, dadurch gekennzeichnet, daß die beiden Führungsteile 5 Kugellagerbuchsen sind.

7. Lenkvorrichtung nach Anspruch 1, dadurch gekennzeichnet, daß die Verbindungsteile 7 abgewinkelte Teile sind, die an der Schraube 4 angeordnet sind und die den Zwischengelenkstab 6 tragen, an dem sie mittels Schrauben befestigt sind.

8. Lenkvorrichtung nach Anspruch 1, dadurch gekennzeichnet, daß die Verbindungsteile 7 in das entsprechende Innere des zugehörigen offenen Führungsteils eingreifen.

9. Lenkvorrichtung nach einem der vorhergehenden Ansprüche, dadurch gekennzeichnet, daß:

– das Gehäuse 9 eine Lageraussparung 17 für die Antriebswelle 18 aufweist, eine Lagerausnehmung 19 für die Zwischenwelle 20 und eine Ausnehmung 21 für das zugehörige Führungsteil 5, wobei der Untersetzungsmechanismus 3 im Gehäuse 9 eingeschlossen ist, sowie das Antriebsritzel 22 aufweist, das fest mit der Antriebswelle 18 verbunden ist, zwei Zwischenritzel 23, 24 aufweist, die fest mit der Zwischenwelle 20 verbunden sind und das Aufnahmeritzel 16 aufweist; die Zwischenwelle 20 wird auf seiten der Mutter 15 von einem Nadellager 26 getragen, das in der mittigen Platte 8 angeordnet ist,
– das Gehäuse 10 eine Ausnehmung 27 für das zugehörige Führungsteil 5 aufweist.

10. Lenkvorrichtung nach Anspruch 9, dadurch gekennzeichnet, daß das Gehäuse 10 den Antriebsmotor 1 aufweist, der in einer Ausnehmung 28 der mittigen Platte 8 angeordnet ist und der an dieser mittigen Platte 8 mittels Schrauben 29 befestigt ist.

11. Lenkvorrichtung nach Anspruch 9, dadurch gekennzeichnet, daß die Abdichtung der Enden des Zwischengelenkstabes 6 durch einen Balg 25 gewährleistet ist, der das zugehörige Kugellager 30 übergreift.

12. Lenkvorrichtung nach Anspruch 9, dadurch gekennzeichnet, daß die Abdichtung eines jeden Endes der Schraube 4 durch einen Stopfen 31 erfolgt, welcher in einer Durchlaßöffnung 32 des zugehörigen Endes sitzt und die im entsprechenden Gehäuse 9, 10 vorgesehen ist.

13. Lenkvorrichtung nach Anspruch 9, dadurch gekennzeichnet, daß die Gehäuse 9 und 10 Befestigungsöffnungen 33 aufweisen zur Montage und zur Befestigung der Gesamtheit der Vorrichtung an einer ebenen Fläche 34 des hinteren Fahrzeugrahmens.

14. Lenkvorrichtung nach Anspruch 1, dadurch gekennzeichnet, daß der Zwischengelenkstab 6 zwei Abflachungen 35 aufweist, die symmetrisch zur Stabachse sind und deren Länge geringfügig größer ist als der Weg des Stabes 6, erhöht um die Dicke der mittigen Platte 8.

**Claims**

1. A steering arrangement for the rear reels of a vehicle with four steerable reels comprising a worm-nut system (2) formed by a worm (4) and a nut (15) driven in rotation by an electric drive system (1) by way of a step-down mechanism (3), characterised in that the worm (4) is disposed between two elements (5) which are intended to provide for longitudinal guidance thereof, and is fixed with respect to an inter-ball joint bar (6) connected at each of its ends to a control link for reels rile being parallel to the worm (4), and that the assembly is supported by a central plate (8) disposed perpendicularly to the axis of the worm (4), the central plate (8) receiving two casings (9) and (10) disposed on respective sides of said plate (8) to which they are fixed in such a way as to provide a closed assembly, said central plate (8) having the inter-balljoint bar (6) passing therethrough.

2. A steering arrangement according to claim 1 characterised in that the worm-nut system (2) is a ball-circulation system.

3. A steering arrangement according to claim 1 characterised in that the worm-nut system (2) is mounted in a housing (11) in the central plate (8) and is held on respective sides by a thrust member (12) held by a clamping nut (13) which co-operates with a shoulder (14) which is fixed with respect to the nut (15).

4. A steering arrangement according to claim 3 characterised in that the thrust members (12) are roller-type thrust bearings and that the clamping nut (13) applies a prestress to said roller-type thrust bearings (12).

5. A steering arrangement according to claim 3 characterised in that the receiving pinion (16) of the step-down mechanism is integrated in the shoulder (14) of the nut (15).

6. A steering arrangement according to claim 1 characterised in that the two guide elements (5) are ball-type bushes.

7. A steering arrangement according to claim 1 characterised in that the connecting elements (7) are members of right-angled configuration which are mounted on the worm (4) and which carry the inter-balljoint bar (6) on which they are fixed by means of screws.

8. A steering arrangement according to claim 1 characterised in that the connecting elements (7) respectively engage within the corresponding guide element (5) which is open.

9. A steering arrangement according to one of the preceding claims characterised in that:
– the casing (9) comprises a rolling bearing housing (17) for the drive shaft (18), a rolling bearing housing (19) for the intermediate shaft (20) and a housing (21) for the corresponding guide element (5), the step-down mechanism (3) being enclosed in said casing (9) and comprising a drive pinion (22) which is fixed with respect to the dive shaft (18), two intermediate pinions (23, 24) which are fixed with respect to the intermediate shaft (20) and the receiving pinion (16) ; the intermediate shaft (20) being supported on the side of the nut (15) by a needle bearing (26) mounted in the central plate (8) , and

– the casing (10) comprises a housing (27) for the corresponding guide element (5).

10. A steering arrangement according to claim 9 characterised in that the casing (10) comprises the drive motor (1) which is mounted in a housing (28) of the central plate (8) and which is fixed to said central plate (8) by means of screws (29).

11. A steering arrangement according to claim 9 characterised in that sealing integrity of each of the ends of the inter-balljoint bar (6) is provided by a bellows (25) which covers the corresponding ball joint (30).

12. A steering arrangement according to claim 9 characterised in that sealing integrity of each of the ends of the worm (4) is provided by a plug (31) which is fitted into the through hole (32) for said corresponding end, said hole being disposed in the casing (9, 10) in question.

13. A steering arrangement according to claim 9 characterised in that the casings (9, 10) have fixing holes (33) which permit the role of the arrangement to be mounted and fixed on the flat face (34) of the rear mounting cradle of the vehicle.

14. A steering arrangement according to claim 1 characterised in that the inter-balljoint bar (6) comprises two flats (35) which are symmetrical with respect to the axis of the bar and which are of slightly greater length than the travel of said bar (6) increased by the thickness of the central plate (8).

FIG.1

FIG.2

EP 0 371 852 B1

FIG. 3

FIG.4

EP 0 371 852 B1

FIG.5

FIG.6